# EUROPEAN PATENT APPLICATION

(11) **EP 4 498 054 A1**
(43) Date of publication of application: **29.01.2025**
(21) Application number: 24190788.0
(22) Date of filing: 25.07.2024
(51) Int. Cl.: G01K 11/3206

(54) **FIBRE-OPTIC SENSOR**

(30) Priority: 27.07.2023 GB 202311600
(71) Applicant: Airbus Operations Limited, Bristol BS34 7PA (GB)
(72) Inventor: WOOD, Christopher, Bristol, BS34 7PA (GB)
(74) Representative: EIP

(57) **Abstract**

Disclosed is a fibre-optic sensor which comprises an optical fibre comprising a first Fibre Bragg Grating, FBG, arranged along a first part of the optical fibre, and a first element disposed on an outer surface of the optical fibre. The first element has a first coefficient of thermal expansion, CTE, different to a CTE of the optical fibre, and is configured to induce a change in strain across the FBG in response to a change in temperature of the fibre-optic sensor in the region of the first FBG. The first element is bonded to the optical fibre at two first locations that are separated, along the optical fibre, from one another by the first part, and unbonded to the optical fibre along the first part.

## Description

### TECHNICAL FIELD

The present invention relates to fibre-optic sensors comprising Fibre Bragg Gratings.

### BACKGROUND

Fibre-optic sensors comprising Fibre Bragg Gratings (FBGs) can be used for making temperature measurements. However, at cryogenic temperatures, for example, such as those suitable for storing liquid hydrogen, it can be difficult to measure temperature change using an FBG because the FBG might only undergo a very small change in refractive index in response to a temperature change. This can limit the sensitivity of the FBG to changes in temperature which is detrimental to the ability of the fibre-optic sensor to make temperature measurements.

It is desirable to provide improved fibre-optic sensors comprising Fibre Bragg Gratings.

### SUMMARY

A first aspect of the present invention provides a fibre-optic sensor comprising an optical fibre comprising a first Fibre Bragg Grating, FBG, arranged along a first part of the optical fibre, and a first element disposed on an outer surface of the optical fibre. The first element has a first coefficient of thermal expansion, CTE, which is different to a CTE of the optical fibre. The first element is configured to induce a change in strain across the FBG in response to a change in temperature of the fibre-optic sensor in the region of the first FBG. The first element is bonded to the optical fibre at two first locations that are separated, along the optical fibre, from one another by the first part, and unbonded to the optical fibre along the first part.

The first element, in having a first CTE which is different to the CTE of the optical fibre, thereby expands or contracts in response to a given temperature change at a different rate to the optical fibre. This can increase the change in strain caused by the given temperature change which enhances a measurement made by the FBG. This can thereby improve the sensitivity of the fibre-optic sensor. Further, the first element, in being unbonded to the optical fibre along the first part corresponding to the location of the FBG, or in other words bonded only either side of the FBG, may allow for a relatively uniform change in strain to be reliably induced across the first FBG. Specifically, bonding only either side of the FBG can reduce the effect of irregularities or defects in at least, firstly, a structure of the first element and/or, secondly, a bonded interface between the element and the FBG, for example. For example, if the first element were bonded to the optical fibre along the length of the first part corresponding to the location of the FBG, then any inconsistencies or defects in the first element and/or the bonding of the first element to the optical fibre may result in different changes in strain being induced in different sections of the FBG. This may negatively impact the accuracy of the temperature measurements derivable from the fibre-optic sensor. However, by not bonding the first element to the optical fibre along the length of the first part corresponding to the location of the FBG (and bonding either side of the first part), the change in strain induced by the first element may be relatively uniform across the length of the FBG, even if there are inconsistencies or defects in the first element and/or the bonding of the first element to the optical fibre. Accordingly, a relatively uniform change in strain can be reliably induced across the FBG. This can, in turn, improve the accuracy of measurements made by the fibre-optic sensor.

Optionally, the first CTE is larger than the CTE of the optical fibre. This can allow the first element to expand more than the optical fibre due to a given increase in temperature, or contract more than the optical fibre due to a given decrease in temperature. This can increase a strain across the FBG which can improve the sensitivity and accuracy of measurements made by the fibre-optic sensor. This can be particularly useful at cryogenic temperatures where the sensitivity of the FBG might be very low.

Optionally, a portion of the first element extends between the two first locations, along the optical fibre. In such a configuration, the element, when expanding, can act to expand the FBG and induce change in the strain across the FBG by applying a tensile stress. In this way, expansion of the element occurs in the same direction as expansion of the FBG due to a given change in temperature, which can increase an overall strain across the FBG compared with, for example, a fibre-optic sensor without such an element. This can enhance sensitivity of the FBG and improve accuracy of the fibre-optic sensor.

Optionally, the fibre-optic sensor further comprises a masking element which is disposed between the optical fibre and the first element, and extends, along the optical fibre, across the first part of the optical fibre. The masking element is configured to prevent bonding of the first part of the optical fibre with the portion of the first element. The masking element can prevent or reduce a risk of the first element inducing a non-uniform strain across the FBG by, for example, coming into contact with and/or unintentionally bonding with the first part of the optical fibre comprising the FBG. This can improve the reliability of the fibre-optic sensor in providing accurate measurements.

Optionally, the first element comprises a first portion disposed at a first of the two first locations and a second portion disposed at a second of the two first locations, the first part being between the first of the two first locations and the second of the first locations and the first portion being physically separated from the second portion. The fibre-optic sensor also comprises a first fixing point and a second fixing point configured such that the fibre-optic sensor is affixable to an external environment. The first part of the optical fibre, and at least a portion of the first element, is between the first fixing point and the second fixing point along the optical fibre. In examples, the first portion comprises the first fixing point and the second portion comprises the second fixing point.

In such a configuration, when the first portion and the second portion expand, because they are located either side of the FBG arranged along the first part of the optical fibre, they can act to compress and induce a change in strain across the FBG. The compression of the FBG from expansion of the first portion and the second portion due to an increase in temperature can exceed the expansion of the FBG, for example, such that the FBG undergoes a contraction in response to an increase in temperature. Similarly, contraction of the first portion and the second portion due to a decrease in temperature can expand the FBG and overcome the contraction of the FBG, for example, such that the FBG undergoes an expansion in response to a decrease in temperature. In both cases, the FBG can experience an increased range of strain compared to fibre-optic sensors which do not comprise the first element, thereby improving sensitivity of the fibre-optic sensor. Additionally, since the first portion and second portion are provided at different lengths of the fibre to the FBG, there can be greater design flexibility in how the element is arranged relative to the FBG, for example, whilst still allowing the element to induce a change in strain in the FBG. The first fixing point and the second fixing point provide resistance such that the at least one of the first and second portion can induce change in the strain across the FBG.

Furthermore, the positioning of the fixing points relative to the FBG can provide for different lengths of the element between the fixing point and the FBG to be used. For example, by positioning the fixing points further away from the FBG, a greater length of the element can be provided between the fixing point and the FBG. This means that, for a given temperature change, there is an overall greater change in length of the element between the fixing point and the FBG. This can increase an overall change in strain in the FBG. This can permit elements formed from a material with relatively low CTEs to be used, where, for example, the material has suitable properties for the environment for which it exists. For example, a first material may be resistant to corrosion, but have a lower CTE than a second material. Producing a relatively longer element of the first material compared with an element of the second material and positioning the fixing points further apart can allow the element of the first material to induce a similar change in strain in the FBG to that induced by an element of the second material, for example, whilst being more resistant to corrosion than the element of the second material. In other words, the fixing points provide for flexibility in the design and material choice of the fibre-optic sensor.

Furthermore, in being affixable to the external environment, a measurement made by the FBG can be correlated with a position in the external environment. This can allow a temperature measurement made by the fibre-optic sensor to correspond to a temperature at a known position in the external environment, for example.

Optionally, the fibre-optic sensor further comprises a layer, the first portion of the first element bonded to the layer at the first fixing point and the second portion of the first element bonded to the layer at the second fixing point. The layer is otherwise unbonded to the element, and the layer extends, along the optical fibre, between the first fixing point and the second fixing point.

The layer can provide the resistance which can be used by the first element to generate a compressive strain on the FBG, without necessarily being affixed to the external environment. This can be useful if the fibre-optic sensor needs to be relatively movable, for example. For example, the fibre-optic sensor may be moved between various measurement locations where attachment to the external environment would be time-consuming. Having such a layer, an enhanced change in strain can be induced without necessarily requiring attachment to the external environment, allowing for straightforward redeployment of the fibre-optic sensor.

Optionally, the layer is at least partially separated from at least one of the first portion of the first element and the second portion of the first element by a masking element configured to prevent bonding of the at least one first portion or second portion of the element with the layer. The masking element can prevent or reduce a risk of the first element inducing a non-uniform strain across the FBG by, for example, coming into contact with and/or unintentionally bonding with the layer. This can improve the reliability of the fibre-optic sensor in providing accurate measurements.

Optionally, the layer is metallic. This can improve heat transfer from an external environment to the first element. This can improve the accuracy of the fibre-optic sensor by ensuring the first element has a temperature more closely matching that of the external environment. In improving the heat transfer, a response time of the fibre-optic sensor, that is, a speed at which a measurement can be provided, can also be improved.

Optionally, at least one of the first portion and the second portion are longer than the first part, as measured along the fibre. This can ensure a change in length of the first portion and the second portion is larger than a change in length of the first part of the fibre. This can increase the strain across the FBG for a given temperature change and, as a result, improve the accuracy of a measurement of the fibre-optic sensor.

Optionally, the first element is metallic. This can mean the first element exhibits low or no hysteresis, which can improve the accuracy of measurements which can be made by the fibre-optic sensor. The first element, having low or negligible hysteresis, can be more suitably used for absolute measurements as the measurements are more accurate with usage over time compared with elements which exhibit hysteresis.. The first element, being metallic, can conduct heat effectively and thereby generate an accurate measurement and improve sensitivity of the fibre-optic sensor.

Optionally, the first element is bonded to a coating of the optical fibre. This can allow the first element to be added onto existing fibre-optic sensors at a later stage, for example after manufacture of the optical fibre. This can allow existing fibre-optic sensors to be adapted according to the present invention.

Optionally, the first element is bonded to a cladding of the optical fibre. This can transmit force from the first element more directly into the first part of the optical fibre, for example, by providing better coupling to the fibre and the FBG, as there are fewer intermediate layers between the element and the FBG. This can improve the sensitivity of a measurement of the FBG which can in turn improve accuracy of the fibre-optic sensor.

Optionally, the first element extends substantially around a circumference of the optical fibre. This can induce a relatively uniform strain across the FBG, which can generate a more accurate measurement than, for example, partially extending around the optical fibre such as a linear strip, for example. In extending substantially around a circumference of the optical fibre, the first element can be less dependent on alignment with the external environment in detecting a change in temperature, for example, which can generate a more reliable or more accurate measurement compared with, for example, the first element extending along a portion of the circumference of the optical fibre.

Optionally, the masking element extends substantially around a circumference of the optical fibre. Similarly, this can ensure the first element remain unbonded from the first part of the optical fibre.

Optionally, the fibre-optic sensor further comprises a second FBG arranged along a second part of the optical fibre, and a second element disposed along the optical fibre, the second element physically separated from the first element. The second element has a second CTE different to the CTE of the optical fibre, and is configured to induce a change in strain across the second FBG in response to a change in temperature of the fibre-optic sensor in the region of the second FBG. The second element is bonded to the optical fibre at two second locations that are separated, along the optical fibre, from one another by the second part, and unbonded to the optical fibre along the second part.

The fibre-optic sensor, in comprising a second FBG and second element, can thereby measure a change in temperature at a second location. The first element is physically separated from the second element. This can prevent heat transferring from the first element to the second element. This can allow a measurement made by the first FBG to be better distinguished from the second FBG, as the temperature change measured by a particular FBG is more closely correlated with a local change in temperature. This can prevent smoothing of a temperature gradient, for example.

Optionally, the second element comprises a third portion disposed at a first of the two second locations and a fourth portion disposed at a second of the two second locations, the second part being between the first of the two second locations and the second of the two second locations and the third portion being physically separated from the fourth portion. The first and second FBG can each, therefore, be subject to compressive stress, and strain may accordingly be induced in each. In examples, the fibre-optic sensor comprises a third fixing point and a fourth fixing point, the second part of the optical fibre and at least a portion of the second element being between the third fixing point and the fourth fixing point. The third and fourth fixing points can help isolate the second FBG from the first FBG and vice versa as at least some expansion of, for example, the first element is contained within the first and second fixing points whilst at least some expansion of the second element is contained within the third and fourth fixing points. In further examples, the third portion comprises the third fixing point and the fourth portion comprises the fourth fixing point. In yet further examples where the fibre-optic sensor comprises a layer, the second element is bonded to the layer at the third fixing point and the fourth fixing point.

Optionally, the second CTE is the same as first CTE. This can mean the second FBG can be calibrated in the same way as the first FBG as the first element can undergo a same or substantially similar expansion for a given change in temperature as the second element, for example if the first element otherwise has the same or similar dimensions to the second element. This can simplify installation of the fibre-optic sensor, for example.

Optionally, the second portion of the first element is the third portion of the second element. In this way, the fibre-optic sensor can make two measurements whilst, for example, a weight of the fibre-optic sensor, or an amount of material to fabricate the first element and second element, is reduced compared with, for example, having a separate second portion and third portion. This can decrease a spatial footprint of the first and second element which can allow further FBGs and corresponding elements to be included in the fibre-optic sensor.

A second aspect of the present invention provides an aircraft component comprising a fibre-optic sensor according to the first aspect. The aircraft component can be measured by the fibre-optic sensor and similar benefits to those described above can be achieved.

Optionally, the aircraft component is a cryogenic fuel tank and the fibre-optic sensor is arranged within the cryogenic fuel tank such that the fibre-optic sensor is operable to measure a change in temperature of the cryogenic fuel tank, for example a change in temperature of a contents of the cryogenic fuel tank. In examples, the fibre-optic sensor is arranged within the cryogenic fuel tank such that the fibre-optic sensor is operable to determine a volume of cryogenic liquid stored within the cryogenic fuel tank based on a change in temperature of the cryogenic fuel tank. For example, the fibre-optic sensor may measure a change in temperature at a given location in the fuel tank, for example corresponding with the position of the first FBG, wherein the given location corresponds to a given volume of cryogenic liquid in the fuel tank. In some examples, a plurality of fibre-optic sensors are arranged within the cryogenic fuel tank such that the fibre-optic sensors are able to determine a volume of cryogenic liquid stored within the cryogenic fuel tank based on the difference in temperature between the gaseous and liquid phases of the cryogenic fuel stored within fuel tank.

A third aspect of the present invention provides an aircraft comprising the fibre optic sensor of the first aspect or the aircraft component of the second aspect.

Features and advantages described for any particular aspect of the invention may be equally applied to other aspects of the invention where appropriate.

### BRIEF DESCRIPTION OF THE DRAWINGS

Embodiments of the invention will now be described, by way of example only, with reference to the accompanying drawings, in which:
Figures 1 and 1a show a schematic view of a fibre-optic sensor according to an embodiment.
Figure 2 shows a schematic view of a fibre-optic sensor according to an embodiment.
Figure 3 shows a schematic view of a fibre-optic sensor comprising two sensing portions, according to an embodiment.
Figures 4a and 5b show a schematic view of a fibre-optic sensor according to an embodiment.
Figure 5 shows a schematic view of a fibre-optic sensor according to an embodiment.
Figures 6 and 7 show a schematic view of a fibre-optic sensor comprising two sensing portions, according to embodiments.
Figure 8 shows a schematic view of an aircraft component being measured by a fibre optic sensor, according to an embodiment.
Figure 9 shows a schematic view of an aircraft comprising an aircraft component being measured by a fibre optic sensor, according to an embodiment.

### DETAILED DESCRIPTION

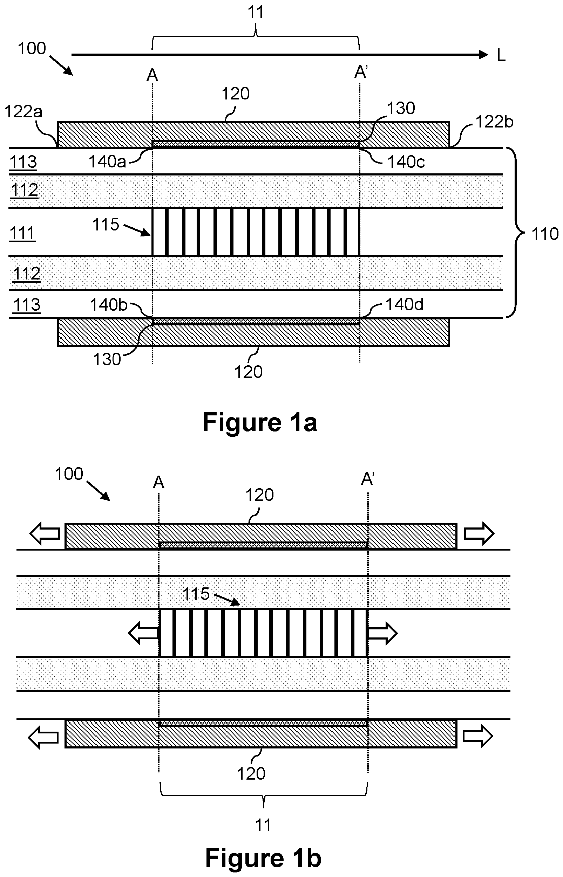

Figure 1a schematically illustrates a fibre-optic sensor 100 according to a first set of examples.

The fibre-optic sensor 100 comprises an optical fibre 110 having a core layer 111, cladding layer 112 and coating layer 113. The optical fibre 110 is for guiding light, which is substantially confined to the core layer 111 by the interface of the core layer 111 with the cladding layer 112. The coating layer 113 provides protection of the cladding layer 112 and core layer 111 from an external environment, for example providing protection from physical damage. As described hereafter and unless specified otherwise, a length of the fibre-optic sensor 100, or optical fibre 110, refers to a direction parallel to a light propagation direction of the optical fibre 110, as will be understood by a person skilled in the art. An indicative axis, L, is provided in Figure 1a and is implicit in figures hereafter.

A Fibre Bragg Grating (FBG) 115 is arranged in the core layer 111 along a first part 11 of the optical fibre 110. In this example, the first part 11 of the optical fibre 110 is a length of the optical fibre 110 which spans between indicative axes A and A', where axes A and A' are perpendicular to the length of the optical fibre 110, and light propagation direction of the optical fibre 110. The FBG 115 is a periodic variation in the refractive index of the core layer 111 of the optical fibre 110.

As those skilled in the art will appreciate, the FBG 115 exhibits wavelength-dependent transmission and reflection properties. Inducing a strain in the FBG 115, or altering a temperature of the FBG 115, can modify the transmission and reflection properties of the FBG 115. For example, an induced strain may increase or decrease a pitch, or period, of the periodic features forming the FBG, which alters the wavelength of light at which the FBG reflects. Similarly, a change in temperature will alter the refractive index of the FBG, which can alter the optical properties of the FBG. Measuring the transmission and reflection properties of the FBG 115, and how said properties change, can allow a surrounding environment of the FBG 115 and optical fibre sensor 100 to be measured. Changes to the transmission and refection properties of the FBG 115 are referred to hereafter as changes in the optical properties of the FBG 115.

The optical fibre 110 has a coefficient of thermal expansion (CTE). The skilled person will understand that a coefficient of thermal expansion of a material relates to a change in physical dimensions of the material in response to a change in temperature. For example, the CTE can be described as a fractional change in length of a material per degree of temperature change. Alternatively, the CTE can be described as a fractional change in an area of a material per degree of temperature change. Alternatively still, the CTE can be a fractional change in volume of a material per degree of temperature change. In the examples described herein, due to the substantially linear dimensions of the fibre-optic sensor, it is natural to describe the CTE in terms of a fractional change in length per degree of temperature change, and to describe a change in temperature as bringing about a change in length of a particular material. However, it will be appreciated that this does not discount that a fractional change in area or volume may also occur in response to a given temperature change.

In response to a given temperature change, the optical fibre 110 and FBG 115 undergoes a change in size, either expanding or contracting depending on the temperature change, which in other words means the FBG 115 experiences a strain. This strain can result in a change to the optical properties of the FBG 115 which can allow the temperature change to be measured. The transmission and reflection properties of the FBG 115 can also change directly due to the change in temperature, independently from the induced strain. However, at cryogenic temperatures, changes in the optical properties of the FBG 115 due to temperature changes of the optical fibre 110 alone are typically relatively small due to the relatively low change in the refractive index of the optical fibre 110 due to temperature, which typically have a silica composition.

The fibre-optic sensor 100 further comprises an element 120 and a masking element 130. The element 120 and masking element 130 are each, in general, disposed on an outer, or exterior, surface of the optical fibre 100. Both the element 120 and the masking element 130 encircle the circumference of the optical fibre 100. In other words, both the element 120 and the masking element 130 span around the entire circumference of the optical fibre 100.

The masking element 130 is disposed along the first part 11 of the optical fibre 110. The masking element may be a material such as PTFE, but in general may be a material with suitable nonreactivity and low coefficient of friction, for example, which prevents bonding of the masking element 130 with the element 120 and/or the coating layer 113, and therefore prevents the element 120 from bonding with the length of the fibre corresponding to the FBG 115. In this example, the masking element 130 is disposed on the coating layer 113 along the first part 11 of the optical fibre 110. That is, the masking element 130 is disposed along the coating layer 113 along the length of the optical fibre corresponding to the FBG 115, between indicative axes A and A'. The masking element may be mechanically wrapped around the coating layer 113, or deposited by electrodeposition or a fibre coating method, for example. The masking element 130 may be made as thin as possible in order to reduce distance between the coating layer 113 and the element 120, whilst ensuring the coating layer 113 is unbonded to the element 120. This can improve the planarity of the element 120 which can lead to a more uniform strain profile across the element 120, which can improve performance of the element 120 in inducing a uniform change in strain in the FBG.

The element 120 is disposed along a greater length of the optical fibre 110 than the FBG 115, the greater length including the first part 11 of the optical fibre 110. That is, the element 120 spans from a position 122a on one side of the first part 11 of the optical fibre 110 to a position 122b on the other side of the first part 11 of the optical fibre 110, relative to the optical fibre length.

Along the first part 11 of the optical fibre 110, the element 120 is not bonded, that is, unbonded, to the optical fibre 110. In this example, the masking element 130 provides a protective layer which prevents bonding of the element 120 with the optical fibre 110 at the first part 11.. In other words, at locations along the optical fibre 110 at which the FBG 115 is disposed, the element 120 is not bonded to the optical fibre 110.

Outside of the first part 11 of the optical fibre 110, that is either side of the masking element 130, or indicative axes A and A', the element 120 is bonded to the optical fibre 110. In this example, the element 120 is bonded to the coating layer 113 along contacting surfaces of the coating layer 113 with the element 120.

The element 120 has a CTE which is higher than the CTE of the optical fibre 110. For a given temperature change, therefore, a given length of the element 120 changes in length more than the same length of optical fibre 110. The element 120, being bonded to optical fibre 110 either side of the first part 11 of the optical fibre 110, thereby induces a change, in this example an increase, in strain on the FBG 115 as the element 120 expands. This can be seen in the indicative arrows of Figure 1b, which illustrates an expansion of the element 120 and the resulting strain on the FBG 115. The strain experienced by the FBG 115 is changed, in this example increased compared with, for example, the strain induced by the expansion or contraction of the optical fibre 110 alone. The optical fibre sensor 100, having the element 120, is therefore more sensitive to a given change in temperature which can permit more accurate readings of temperature changes in a surrounding environment of the optical fibre sensor 100.

As described herein, a change in the strain of the FBG refers to a change in the overall strain induced in or experienced by the FBG, such as an overall increase in strain induced in or experienced by the FBG, unless specified otherwise. This can be contrasted with, for example, a local change in the strain, or in other words a change or in how the strain is distributed across the FBG, which might impact uniformity of the strain, for example. An overall strain can be a tensile strain, wherein the length is increased relative to an original length, or a compressive strain, wherein the length is decreased relative to the original length.

The element 120 is unbonded to the optical fibre along the first part 11, that is, along the length of the optical fibre corresponding to the FBG 115. This can prevent the element 120 inducing non-uniform strain across the FBG 115 in at least the following ways:

Firstly, for example, if the element 120 was unevenly or intermittently bonded to the optical fibre along the length corresponding with the FBG 115 then the element 120 may non-uniformly impart stress onto the optical fibre 110, and there is a risk that the FBG 115 experiences a non-uniform strain and that the optical properties of the FBG 115 are disrupted. For example, the pitch of the FBG may be constant before expansion of the element 120, but due to uneven strain after expansion of the element 120 the FBG may comprise a first pitch along a first subsection and a second pitch along a subsection, giving rise to disrupted optical properties of the FBG 115 as a whole. Such an uneven or intermittent bonding could occur due to errors in fabrication of the fibre-optic sensor, for example, or could be introduced during the lifespan of the fibre-optic sensor.

Secondly, for example, if the element 120 does not have consistent thickness, for example, or more generally a heterogeneous structure along the length of the FBG, then in response to a given change in temperature it may expand in a non-uniform fashion. If the element 120 is bonded to first part 11 of the optical fibre 110 then this non-uniform expansion, for example, could impart non-uniform stresses on the optical fibre 110 and hence induce non-uniform strain in the FBG 115, again giving rise to disparities in the optical properties of the FBG 115.

Both cases described above can reduce the accuracy of a measurement of the FBG.

Instead, the element 120 is bonded most closely to the FBG 115 at positions 140a-140d which are adjacent to either end of the masking element 130. The FBG 115 experiences a strain induced from stresses outside of the FBG 115, which means the FBG 115 can experience a more uniform strain along its length. In a sense, bonding the element 120 at positions outside of the FBG 115 but not along the FBG 115 can be considered to average out and hence mitigate local disparities in the structure of the element 120 and/or bonding of the element 120 with the optical fibre 110. This can ensure a more reliable and/or accurate reading from the fibre-optic sensor 100.

The element 120 is metallic. The element 120 may be formed from silver, nickel, copper, gold, lead, or zinc, for example. The element 120, in being metallic, can exhibit low hysteresis. The element 120 can undergo a first expansion in size due to a first change in temperature, and a first subsequent contraction in size. Having low hysteresis means the element 120 contracts to the same, or substantially the same, size as it had before the first expansion. This means subsequent measurements of the FBG are more accurate and, for example, recalibration of the fibre-optic sensor may not be required. The CTE of the element 120 may be between 10 . 10⁻⁶ /°C and 40 · 10⁻⁶ /°C, for example, whereas the CTE of the optical fibre 110, made from silica, may be less than 1 . 10⁻⁶ /°C, for example. In some examples, the CTE of the element 120 may be more than 10 times higher than that of the optical fibre 110, for example.

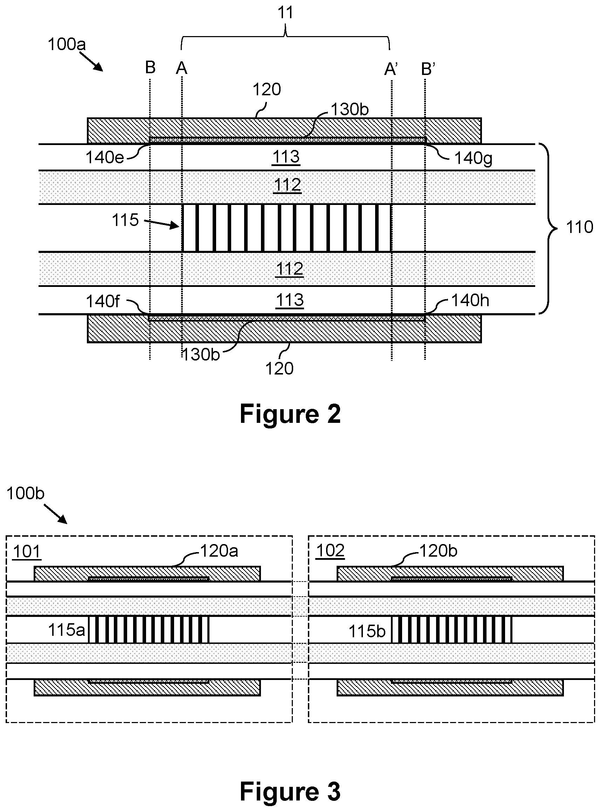

Figure 2 illustrates schematically a variation on the example of Figure 1a. The fibre-optic sensor 100a is substantially similar to the fibre-optic sensor 100 illustrated by Figure 1a and described above. In the fibre-optic sensor 100a, a masking element 130b extends beyond the first part 11 of the fibre along which the FBG 115 is arranged. That is, rather than span from A to A', the masking element 130b spans a longer length, from B to B'. As a result, the element 120 is most closely bonded to the FBG 115 at positions 140e-h. This can provide a more uniform strain in a similar manner to that described above. The increased length of the masking element 130b can also be useful in introducing tolerance in, for example, manufacturing or fabrication of the fibre-optic sensor 100a, such that the risk of the element 120 being bonded to the first part 11 of the optical fibre 110 is reduced. In general, the masking element 130 can be disposed along an appropriate length which matches or exceeds the length of the FBG 115, depending on, for example, the manufacture process.

The fibre-optic sensors 100, 100a can be considered to comprise a first sensing portion which comprises a first FBG 115 and first element 120, the first element enhancing sensing capabilities of the first FBG 115. Figure 3 illustrates a fibre-optic sensor 100b comprising a first sensing portion 101 at a first position and a second sensing portion 102 at a second, different position. The first sensing portion 101 comprises a first FBG 115a and first element 120a, as described above. The second sensing portion 102 comprises a second FBG 115b and a second element 120b. Each of the first sensing portion 101 and the second sensing portion 102 functions similarly to the FBG 115 and element 120 describes for Figures 1a,b and 2. By being in different positions, each sensing portion 101, 102 allows a particular temperature change to be correlated with a particular respective position in an external environment. This can be performed using a wave-division multiplexing scheme or a time-division multiplexing scheme, for example.

The first element 120a is physically separated from second element 120b. This can reduce or eliminate heat transfer from the first element 120a to the second element 120b, which can help distinguish a temperature change measured by the first FBG 115a from a temperature change measured by the second FBG 115b. Due to the physical separation of the first element 120a from the second element 120b, the second FBG 115b is not affected by expansion of the first element 120a, and similarly the first FBG 115a is not affected by expansion of the second element 120b. This can also help distinguish a temperature change measured by the first FBG 115a from a temperature change measured by the second FBG 115b.

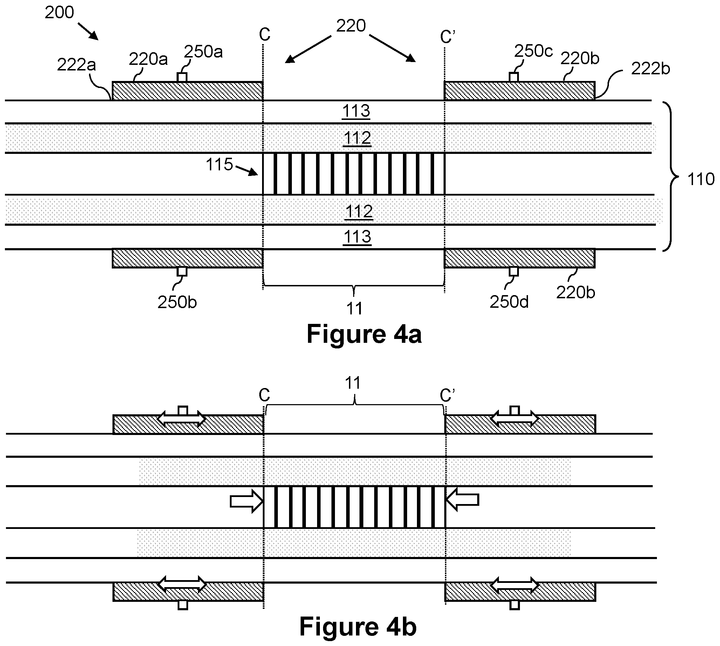

Figure 4a illustrates a fibre-optic sensor, 200, according to a second set of examples. In the first set of examples, the element 120 can be considered to expand with the FBG 115. In the second set of examples, as described hereafter, expansion of the element 120 is used to counteract the expansion of the FBG.

Similarly to the examples illustrates by Figures 1-3, the fibre-optic sensor 200 comprises an optical fibre 110 comprising an FBG 115 along a first part 11 of the optical fibre 110, and the fibre-optic sensor 200 is for measuring a temperature change in a surrounding environment of the fibre-optic sensor 200.

The fibre-optic sensor 200 comprises an element 220 which is distributed across a first portion 220a and a second portion 220b. The first portion 220a and second portion 220b of the element 220 are similarly disposed to an outer surface of the optical fibre 110. In this example, the outer surface is the coating layer 113 of the optical fibre. Similarly to the element 120 of Figures 1-3, the element 220 and portions thereof span the circumference of the optical fibre 110.

The first portion 220a is physically separate from the second portion 220b. In this example, the first part 11 of the optical fibre 110 spans from a point C to a point C', as illustrated by the indicative axes in Figure 4. The first portion 220a spans a first length which starts at a point 222a and terminates at the start of the first part 11 of the optical fibre, that is at point C. The second portion 220b spans a second length which begins at the end of the first part 11 of the optical fibre, that is at point C' and terminates at a point 222b. In this sense, the first part 11 of the fibre 110 does not have the element 220 bonded to an outer surface, but on either side of the first part 11 of the fibre 110 the element 220 is bonded to an outer surface. On a first side, with respect to the length of the optical fibre 110, of the first part 11 of the optical fibre 110, the first portion 220a is bonded to the outer surface of the optical fibre. On a second side, with respect to the length of the optical fibre 110, of the first part 11 of the optical fibre 110, the second portion 220b is bonded to the outer surface.

In this configuration, expansion of the first portion 220a and the second portion 220b of the element 220 act to compress the FBG 115, as illustrated schematically in Figure 4b. Compression by the element 220 induces a change in strain across the FBG 115 which can allow the fibre optic sensor 200 to measure a change in temperature in the surrounding environment. The element 220 has a higher CTE than the optical fibre 110, to further enhance the compression effect resulting from expansion of the first portion 220a and the second portion 220b of the element 220.

The first portion 220a and the second portion 220b are each longer than the first part of the optical fibre 110. It will be appreciated that the greater the size of the first portion 220a or the second portion 220b relative to the first part of the optical fibre 110, the greater the compressive stress which can be imparted on the FBG 115, which can improve sensitivity of the fibre-optic sensor 200. Compressive stress and the resulting strain can decrease the pitch of the FBG 115.

The fibre-optic sensor 200 comprises fixing points 250a-d. The fixing points are 250a-d are located on the first portion 220a of the element 220 and the second portion 220b of the element 220. That is, the first portion 220a comprises first fixing points 250a,b and the second portion 220b comprises second fixing points 250c,d. The first part 11 of the optical fibre 110 including the FBG 115 and at least a portion of the element 220 lies between the first fixing points 250a,b and the second fixing points 250c,d.

The fixing points 250a-d are affixable to an external environment such that the fibre-optic sensor 200 is attachable to the external environment. In being attached to an external environment, the distance between the fixing points does not substantially change even as the element 220 expands, which causes stresses from expansion of the element 220 to be experienced by the FBG 115 rather than transmitted down the fibre, for example. Attachment to an external environment can allow a measured temperature change to be more accurately correlated with a known fixing point in the external environment. The fixing points 250a-d, in affixing to the external environment, provided resistance for the element 220. When the first and/or second portions 220a,b expand, they push against the fixing point to result in increased compression on the FBG 115. This can further enhance the sensitivity of the FBG and improve the accuracy of a measurement of the fibre-optic sensor. The fixing points 250a-d can be detachable fasteners, for example, or can be permanent or semi-permanent means of attachment such as adhesive. The external environment can be an environment in which a temperature change is to be measured, for example, the walls of a cryogenic fuel tank.

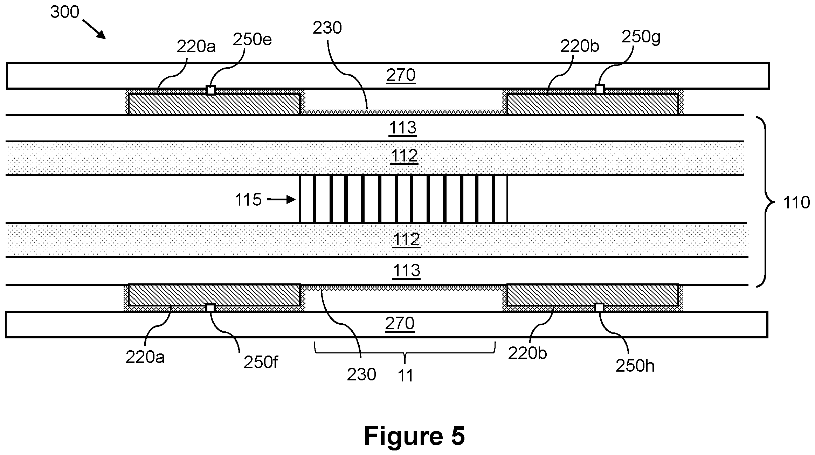

Figure 5 illustrates a fibre-optic sensor 300. The fibre-optic sensor 300 is substantially similar to that described in Figure 4 in comprising an optical fibre 110, an FBG 115 which is arranged along a first part 11 of the optical fibre 110 and an element 220 comprising a first portion 220a and second portion 220b. The arrangement of these components in the fibre-optic sensor 300 can be considered to be the same as those described in Figure 4 for the fibre-optic sensor 200.

The fibre-optic sensor 300 further comprises a masking element 230. Similarly to the masking element 130 of Figures 1-3, the masking element 230 is for preventing bonding of the element 220 with surrounding components of the fibre-optic sensor 300. In the example of Figure 5, the masking element 230 coats substantially all of the outer surfaces of the first portion 220a and the second portion 220b of the element 220. That is, substantially all the surfaces of the first portion 220a and the second portion 220b which are not bonded to the optical fibre 110. The masking element 230 does not coat the first portion 220a and the second portion 220b at the position of fixing points 240e-f.

Additionally, in between the first portion 220a and the second portion 220b, that is along the first part 11 of the fibre 110, the masking element 230 coats the optical fibre coating 113. This prevents the first portion 220a and/or the second portion 220b from bonding with the first part 11 of the optical fibre 110, as described previously. Whilst the first portion 220a and second portion 220b are not disposed over the first part 11, the masking element 230 can prevent inadvertent spill-over of the element 220, which might occur during fabrication, from bonding to the first part 11. Additionally, the masking element 230 can prevent bonding of the optical fibre coating 113 with the layer 270.

The fibre-optic sensor 300 further comprises a layer 270. In this example, the layer 270 is disposed on and runs the length of the optical fibre 110. The layer 270 is disposed on the masking element 230, and as such forms an outermost surface of the fibre-optic sensor 300. Fixing points 250e-f are gaps in the masking element 230 which allows for affixation of the first portion 220a and the second portion 220b of the element 220 to the layer 270, in this example. In this way, the layer 270 can act as an external environment and provide resistance to the expansion of the first portion 220a and the second portion 220b of the element 220, to allow increased compression of the FGB 115.

The layer 270 is metallic but has a lower CTE than the CTE of the element 220. The layer 270, being metallic, can thereby transmit heat more readily to the element 220. This can allow the element 220 to expand and contract more for a given temperature change which can improve the sensitivity and accuracy of the fibre-optic sensor 220. The layer 270, having a lower CTE than the CTE of the element 220, does not expand or contract at the same rate as the element 220 in response to a given change in temperature and so further increases strain through the FBG by resisting the element 220. The masking element 230, in only allowing the element 230 to be bonded to the layer 270 at the fixing points 250e-f, means the element 230 is not overly restrained from expanding or contracting.

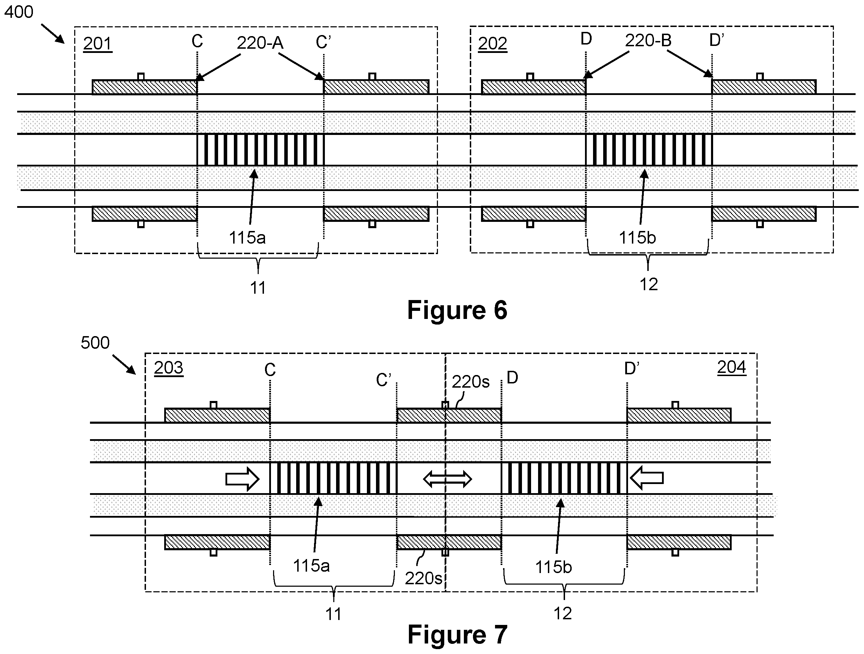

The fibre-optic sensors 200, 300 can be considered to comprise a first sensing portion which comprises a first FBG 115 and a first element 220 comprising a first portion 220a and second portion 220b, the first element 220 enhancing sensing capabilities of the first FBG 115. Figure 6 illustrates a fibre-optic sensor 400 which comprises a first sensing portion 201 and a second sensing portion 202. The first sensing portion 201 comprises a first FBG 115a which spans a first part 11 of the optical fibre 110 from C to C', as illustrated by the indicative axes, and a first element 220-A distributed across a first portion and a second portion, as described for Figures 4-5. The second sensing portion 202 comprises a second FBG 115b which spans a second part 12 of the optical fibre 110 from D to D', as illustrated by the indicative axes, and a second element 220-B. Similar to the fibre-optic sensor 102b illustrated in Figure 3, the first element 220-A is physically separated from the second element 220-B which reduces or prevents heat transfer between the first and second sensing portions 201, 202. Each sensing portion 201, 202 allows a particular temperature change to be correlated with a particular respective position in an external environment.

Figure 7 illustrates a fibre-optic sensor 500 which comprises a first sensing portion 203 and a second sensing portion 204. In this example, the first sensing portion 203 and the second sensing portion 204 share a central element portion 220s which is positioned between the first FBG 115a and the second FBG 115b. In other words, the first element 220-A comprises a first portion and a second portion. The second element 220-B comprises a third portion and a fourth portion, wherein the third portion of the second element 220-B is the second portion of the first element 220a. Expansion of the central element portion 220s induces compression on both the first FBG 115a and the second FBG 115b. This can allow more sensing portions to be provided using fewer element portions, and can increase a density of sensing portions along the fibre-optic sensor 500 compared with each sensing portion having two unique element portions. Accordingly, a total weight of the fibre-optic sensor can also be reduced.

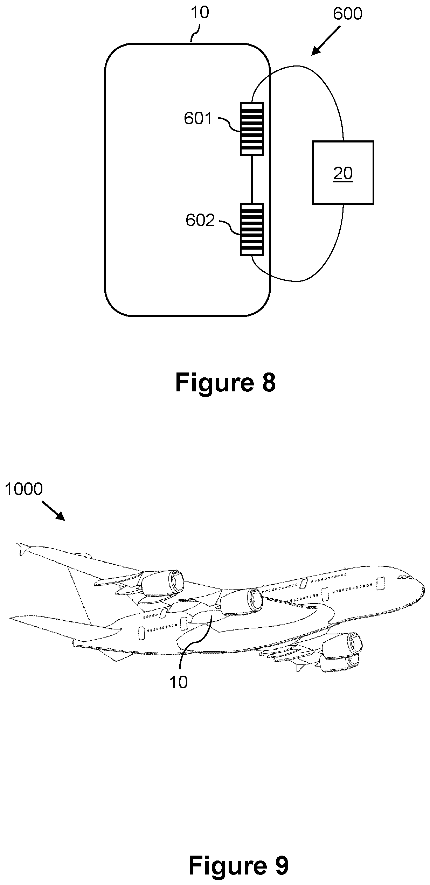

Figure 8 illustrates an aircraft component 10 being measured by a fibre-optic sensor 600 which is coupled to an optical interrogator 20. The fibre-optic sensor 600 comprises a first sensing portion 601 and second sensing portion 602. The sensing portions 601, 602 may be according to any of the examples describe herein, and are used to measure local temperature changes within the aircraft component 10. The aircraft component 10, in this example, is a fuel tank for storing liquid hydrogen and therefore is subject to cryogenic temperatures. The fibre-optic sensor 600 can use a temperature, or temperature change, to establish whether it is currently submerged in liquid hydrogen, and thereby determine a fuel level within the fuel tank. For example, the sensor may be colder when submerged in liquid hydrogen than when outside of liquid hydrogen. The increased sensitivity and accuracy of the fibre-optic sensor 600 allows a volume of fuel within the fuel tank to be measured more accurately. In other examples, other components may be measured using the fibre-optic sensor 600. Such components may be other aircraft components. The skilled person will appreciate that the fibre-optic sensors 100-600 described herein can be applied to any component in which a temperature change might be measured.

Figure 9 illustrates an aircraft 1000 comprising the aircraft component 10, in this example a fuel tank, illustrated by Figure 8. The fibre-optic sensor 600 provides for a low-weight means of measuring current fuel volumes within the fuel tank 10. In being able to more accurately measure the volume of fuel within the fuel tank 10, a remaining range can be more confidently calculated, for example, and fuel can be used by the aircraft 1000 more appropriately.

The above embodiments are to be understood as illustrative examples of the invention. Further embodiments of the invention are envisaged:

In some examples, masking elements may not be present. For example, there may not be a masking element between the element and the first part of the optical fibre, as bonding may not occur outside of desired bonding locations. In such an example, the masking element may be replaced by a gas layer or vacuum layer, for example. Similarly, a masking element may not be present between the element and the layer to which the element is affixed.

In the above examples, fibre-optic sensors comprising a plurality of sensing portions where each sensing portion has a similar or same configuration as each other have been described. In other examples, a range of different sensing portions could be used, in any combination. For example, a fibre optic sensor could comprise a sensing portion according to Figure 1 and a sensing portion according to Figure 4a.

In the above examples, fixing points are described in relation to fibre optic sensors according to Figures 4-7. In other examples, fibre optic sensors according to Figures 1-3 may also comprise fixing points, for example located on the elements at a position within the first part of the fibre.

In the above examples, the elements and masking layers are described as spanning the circumference of the optical fibre. In other examples, the elements and masking layers may only coat a portion of the circumference of the optical fibre, and in some cases may be considered linear strips which span a specific side of the optical fibre. This could further reduce a weight of the fibre-optic sensor, for example.

In the above examples, the CTE of the element is described as being larger than the CTE of the optical fibre. In other examples, the CTE of the element may be smaller than the CTE of the optical fibre and a strain induced by the mismatch in expansion or contraction of the optical fibre relative to the element. Accordingly, it will be appreciated that in examples the CTE of the element is different to the CTE of the optical fibre.

In the above examples, the elements are described as being attached to coating layer of an optical fibre. In other examples, the elements may be attached to a cladding layer, for example if the coating layer is stripped away, or if the elements are bonded before the application of a coating layer. This can allow the elements to more directly induce a strain into the FBG as there are fewer intermediate layers between the element and the fibre and FBG, which can produce better coupling of the element to the fibre.

In the above examples, the fixing points are located on the elements. In other examples, the fixing points may be provided at other locations of the optical fibre such that at least a portion of the element, and the FBG, are located between the fixing points. The fixing points may be attached to the coating layer or cladding layer of the optical fibre, for example.

In the above examples, the element is described as being metallic. In other examples other substances, such as epoxies or acrylics, may be used.

As used herein, adjectives such as "first", "second", "third", and "fourth" are used as labels and do not necessarily imply the existence of other unlabelled features. For example, the third portion of the second element described for Figure 7 does not imply a first and second portion of the second element. Instead, the "third" label is used to distinguish from the first and second portion of the first element.

It is to be understood that any feature described in relation to any one embodiment may be used alone, or in combination with other features described, and may also be used in combination with one or more features of any other of the embodiments, or any combination of any other embodiments. Furthermore, equivalents and modifications not described above may also be employed without departing from the scope of the invention, which is defined in the accompanying claims.

It is to be noted that the term "or" as used herein is to be interpreted to mean "and/or", unless expressly stated otherwise.

## Claims

1. A fibre-optic sensor comprising:
an optical fibre comprising a first Fibre Bragg Grating, FBG, arranged along a first part of the optical fibre; and
a first element disposed on an outer surface of the optical fibre, the first element having a first coefficient of thermal expansion, CTE, different to a CTE of the optical fibre, and being configured to induce a change in strain across the FBG in response to a change in temperature of the fibre-optic sensor in the region of the first FBG, the first element
bonded to the optical fibre at two first locations that are separated, along the optical fibre, from one another by the first part, and
unbonded to the optical fibre along the first part.

2. The fibre-optic sensor of claim 1, wherein a portion of the first element extends between the two first locations, along the optical fibre.

3. The fibre-optic sensor of claim 2, further comprising a masking element i) disposed between the optical fibre and the first element and ii) extending, along the optical fibre, across the first part of the optical fibre, the masking element configured to prevent bonding of the first part of the optical fibre with the portion of the first element.

4. The fibre-optic sensor of claim 1, wherein
the first element comprises a first portion disposed at a first of the two first locations and a second portion disposed at a second of the two first locations, the first part being between the first of the two first locations and the second of the first locations and the first portion being physically separated from the second portion, and
the fibre-optic sensor comprises a first fixing point and a second fixing point configured such that the fibre-optic sensor is affixable to an external environment, the first part of the optical fibre and at least a portion of the first element being between the first fixing point and the second fixing point along the optical fibre, optionally wherein the first portion and the second portion are each longer than the first part of the optical fibre.

5. The fibre-optic sensor of claim 4, wherein the first portion comprises the first fixing point and the second portion comprises the second fixing point.

6. The fibre-optic sensor of claim 5 further comprising:
a layer, the first portion of the first element bonded to the layer at the first fixing point and the second portion of the first element bonded to the layer at the second fixing point, the layer otherwise unbonded to the element, the layer extending, along the optical fibre, between the first fixing point and the second fixing point, optionally wherein the layer is metallic.

7. The fibre-optic sensor of claim 6, wherein the layer is at least partially separated from at least one of the first portion of the first element and the second portion of the first element by a masking element configured to prevent bonding of the at least one first portion or second portion of the element with the layer.

8. The fibre-optic sensor of any previous claim, wherein at least one from:
(i) the first element is metallic,
(ii) the first element extends substantially around a circumference of the optical fibre,
(iii) the first CTE is larger than the CTE of the optical fibre, and
(iv) wherein the first element is bonded to a cladding of the optical fibre or to a coating of the optical fibre.

9. The fibre-optic sensor of any previous claim when dependent on claim 3 or 7, wherein the masking element extends substantially around a circumference of the optical fibre.

10. The fibre-optic sensor of any previous claim, further comprising:
a second FBG arranged along a second part of the optical fibre,
a second element disposed along the optical fibre and physically separated from the first element, the second element having a second CTE different to the CTE of the optical fibre, and being configured to induce a change in strain across the second FBG in response to a change in temperature of the fibre-optic sensor in the region of the second FBG,
bonded to the optical fibre at two second locations that are separated, along the optical fibre, from one another by the second part, and
unbonded to the optical fibre along the second part;
optionally wherein at least one from
(i) the second CTE is the same as the first CTE; and (ii) the second portion of the first element is the third portion of the second element.

11. The fibre-optic sensor of claim 10 when dependent on claim 4, wherein
the second element comprises a third portion disposed at a first of the two second locations and a fourth portion disposed at a second of the two second locations, the second part being between the first of the two second locations and the second of the two second locations and the third portion being physically separated from the fourth portion.

12. The fibre-optic sensor of claim 11, wherein the fibre-optic sensor comprises a third fixing point and a fourth fixing point, the second part of the optical fibre and at least a portion of the second element being between the third fixing point and the fourth fixing point, optionally wherein the third portion comprises the third fixing point and the fourth portion comprises the fourth fixing point.

13. The fibre-optic sensor of claim 12, when dependent on claim 6 and when the third portion comprises the third fixing point and the fourth portion comprises the fourth fixing point, wherein the second element is bonded to the layer at the third fixing point and the fourth fixing point.

14. An aircraft component comprising the fibre-optic sensor of any previous claim; optionally wherein the aircraft component is a cryogenic fuel tank and the fibre-optic sensor is arranged within the cryogenic fuel tank such that the fibre-optic sensor is operable to measure a change in temperature of the cryogenic fuel tank; and further optionally wherein the fibre-optic sensor is arranged within the cryogenic fuel tank such that the fibre-optic sensor is operable to determine a volume of cryogenic liquid stored within the cryogenic fuel tank based on a change in temperature of the cryogenic fuel tank.

15. An aircraft comprising the fibre-optic sensor of any one of claims 1 to 14 or the aircraft component of claim 15.
